# EUROPEAN PATENT SPECIFICATION

(11) **EP 1 139 327 B1**
(45) Date of publication and mention of the grant of the patent: **23.06.2004**
(21) Application number: 00128274.8
(22) Date of filing: 22.12.2000
(51) Int. Cl.: G09G 3/36

(54) **Liquid crystal display device**
Flüssigkristallanzeige
Dispositif d'affichage à cristaux liquides

(30) Priority: 30.03.2000 JP 2000093248
(43) Date of publication of application: 04.10.2001
(73) Proprietor: MITSUBISHI DENKI KABUSHIKI KAISHA, Tokyo 100-8310 (JP)
(72) Inventor: Inoue, Mitsuo, Chiyoda-ku, Tokyo 100-8310 (JP); Agari, Masafumi, Chiyoda-ku, Tokyo 100-8310 (JP); Murai, Hiroyuki, Chiyoda-ku, Tokyo 100-8310 (JP); Tokioka, Hidetada, Chiyoda-ku, Tokyo 100-8310 (JP)
(74) Representative: Popp, Eugen, Dr.

(56) References cited:
- EP-A- 0 271 960
- EP-A- 0 535 954
- EP-A- 0 558 059
- EP-A- 0 797 182
- US-A- 4 680 580
- "THIN FILM TRANSISTOR FOR GRAY SCALE LCD" IBM TECHNICAL DISCLOSURE BULLETIN, IBM CORP. NEW YORK, US, vol. 33, no. 1A, 1 June 1990 (1990-06-01), pages 481-482, XP000117810 ISSN: 0018-8689
- SEIICHI NAGATA: 'Capacitively coupled driving of TFT-LCD' SID INTERNATIONAL SYMPOSIUM 16 May 1989 - 18 May 1989, BALTIMORE, USA, pages 242 - 245

## Description

### BACKGROUND OF THE INVENTION

### Field of the Invention

The present invention relates to a liquid crystal display device, and in particular to a liquid crystal display device capable of gradation display.

### Description of the Background Art

Conventionally, liquid crystal display devices for displaying static or dynamic image have been utilized in personal computers, television receivers, portable telephones, personal digital assistants, and so forth.

Documents EP-A-0797182, EP-A-0271960, US-A-4680580, EP-A-0558059, EP-A-0535954, and SEIICHI NAGATA; ET AL; CAPACITIVELY COUPLED DRIVING OF TFT-LCD; SID INTERNATIONAL SYMPOSIUM. BALTIMORE, MAY 16 - 18, 1989, PLAYA DEL REY, SID, US, PG 242-245 disclose liquid crystal displays.

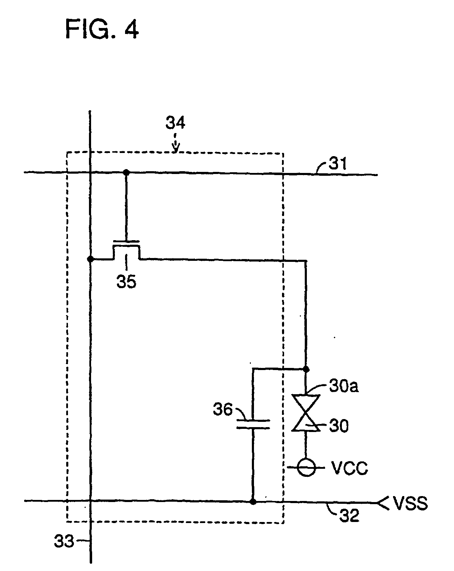

Fig. 4 is a circuit diagram showing main parts of such a liquid crystal display device. In Fig.4, the liquid crystal display includes a liquid crystal cell 30, a vertical scanning line 31, a common interconnection line 32, a horizontal scanning line 33 and a liquid crystal driving circuit 34, the liquid crystal driving circuit 34 including an N channel MOS transistor 35 and a capacitor 36.

N channel MOS transistor 35 is connected between horizontal scanning line 33 and one electrode 30a of liquid crystal cell 30, the gate thereof being connected to vertical scanning line 31. Capacitor 36 is connected between electrode 30a of liquid crystal cell 30 and common interconnection line 32. A power-supply potential VCC is applied to the other electrode of liquid crystal cell 30, and a reference potential VSS is applied to common interconnection line 32. Vertical scanning line 31 is driven by a vertical scanning circuit (not shown) and horizontal scanning line 33 is driven by a horizontal scanning circuit (not shown).

When vertical scanning line 31 is set to a level "H," N channel MOS transistor 35 is conducted, and electrode 30a of liquid crystal cell 30 is charged to the level of horizontal scanning line 33 via N channel MOS transistor 35. For example, the light transmittance of liquid crystal cell 30 will be minimum when electrode 30a is at the level "H," while the light transmittance of liquid crystal cell 30 will be maximum when electrode 30a is at a level "L." A plurality of such liquid crystal cells 30 are arranged in a plurality of rows and columns to form a liquid crystal panel, the panel displaying an image.

A conventional liquid crystal display device has been configured as described above, so that, in order to perform gradation display in one liquid crystal cell 30, an application of an analog potential corresponding to the gradation was required.

However, when an image is displayed in response to a digital image signal, a digital-to-analog conversion circuit will be required for converting a digital signal to an analog signal, leading to a problem of higher cost.

### SUMMARY OF THE INVENTION

A main object of the present invention is, therefore, to provide an inexpensive liquid crystal display device capable of gradation display.

The invention is set forth in attached claim 1.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing a configuration of a color liquid crystal display device according to a comparative example;
Fig. 2 is a circuit diagram showing a configuration of a liquid crystal driving circuit included in the color liquid crystal display device shown in Fig. 1;
Fig. 3 is a circuit diagram showing a configuration of a liquid crystal driving circuit in a liquid crystal display device according to an embodiment of the invention; and
Fig. 4 is a circuit diagram showing a configuration of a liquid crystal driving circuit in a conventional liquid crystal display device.

### DESCRIPTION OF THE PREFERRED EMBODIMENTS

### Comparative Example

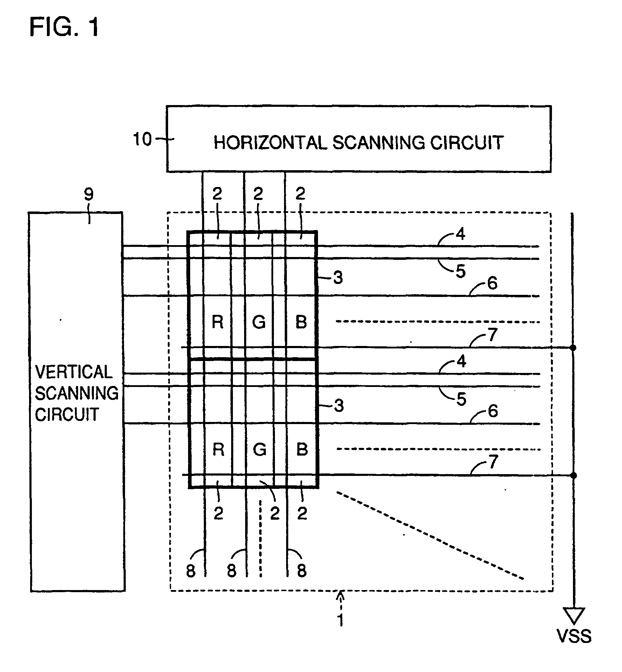

Fig. 1 is a block diagram showing a configuration of a color liquid crystal display device according to a comparative example. In Fig. 1, the color liquid crystal display device includes a liquid crystal panel 1, a vertical scanning circuit 9 and a horizontal scanning circuit 10, and is installed, for example, in a portable telephone.

A liquid crystal panel 1 includes a plurality of liquid crystal cells 2 arranged in a plurality of rows and columns. Liquid crystal panel 1 also includes a pixel signal line 4, a first vertical scanning line 5, a second vertical scanning line 6 and a common interconnection line 7, corresponding to each of the rows, and a horizontal scanning line 8 corresponding to each of the columns.

Liquid crystal cells 2 are pre-divided into groups for each row, each of the groups including three cells. Three liquid crystal cells 2 in each group are respectively provided with color filters of R, G and B. The three liquid crystal cells 2 in each group form a pixel 3.

Vertical scanning circuit 9 sequentially selects a row, one by one from the plurality of rows, in response to an image signal, and drives each of pixel signal line 4, the first vertical scanning line 5 and the second vertical scanning line 6 corresponding to each selected row. A reference voltage VSS is applied to common interconnection line 7.

Horizontal scanning circuit 10 sequentially selects a column, one by one from the plurality of columns, in response to an image signal while vertical scanning circuit 9 is selecting a row, and drives horizontal scanning line 8 corresponding to each selected column.

When vertical scanning circuit 9 and horizontal scanning circuit 10 have scanned all of liquid crystal cells 2 in liquid crystal panel 1, an image is displayed on liquid crystal panel 1.

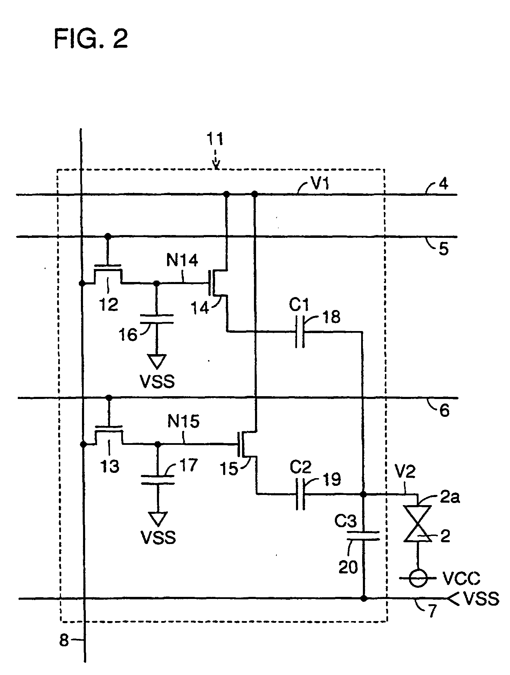

Fig. 2 is a circuit diagram showing a configuration of a liquid crystal driving circuit 11 provided corresponding to each of liquid cells 2. In Fig. 2, liquid crystal driving circuit 11 includes N channel MOS transistors 12-15 and capacitors 16-20, and is connected to a pixel signal line 4, a first vertical scanning line 5, a second vertical scanning line 6 and a common interconnection line 7 in a corresponding row, and to a horizontal scanning line 8 in a corresponding column.

N channel MOS transistor 14 and capacitor 18 are connected in series between pixel signal line 4 and one electrode 2a of crystal cell 2. N channel MOS transistor 12 is connected between horizontal scanning line 8 and the gate (node N14) of N channel MOS transistor 14, the gate thereof being connected to the first vertical scanning line 5. Capacitor 16 is connected between node N14 and common interconnection line 7.

N channel MOS transistor 15 and capacitor 19 are connected in series between pixel signal line 4 and one electrode 2a of liquid crystal cell 2. N channel MOS transistor 13 is connected between horizontal scanning line 8 and the gate (node N15) of N channel MOS transistor 15, the gate thereof being connected to the second vertical scanning line 6. Capacitor 17 is connected between node N15 and common interconnection line 7.

Capacitor 20 is connected between electrode 2a of liquid crystal cell 2 and common interconnection line 7. Power-supply potential VCC is applied to the other electrode of liquid crystal cell 2. The light transmittance of liquid crystal cell 2 varies depending on a voltage between electrodes.

The operation of this liquid crystal driving circuit 11 is now described. When the first vertical scanning line 5 is set to a level "H," i.e., an activation level, N channel MOS transistor 12 is conducted and node N14 is charged to a level "H" or "L" via horizontal scanning line 8. When the second vertical scanning line 6 is set to the level "H," i.e., the activation level, N channel MOS transistor 13 is conducted and node N15 is charged to a level "H" or "L" via horizontal scanning line 8.

For example, both nodes N14 and N15 are in the level "H," N channel MOS transistors 14 and 15 are conducted and electrode 2a of liquid crystal cell 2 is connected to pixel signal line 4 via capacitor 18 and N channel MOS transistor 14, and also via capacitor 19 and N channel MOS transistor 15. Assuming here that the potential of pixel signal line 4 is V1, and that the capacitance value of capacitors 18-20 are C1-C3, then a potential V2 of electrode 2a of liquid crystal cell 2 will be V2 = V1 x (C1 + C2) / (C1 + C2 + C3) = Va.

If nodes N14 and N15 are in the levels "H" and "L" respectively, N channel MOS transistor 14 is conducted while N channel MOS transistor 15 is non-conducted, and electrode 2a of liquid crystal cell 2 is connected to pixel signal line 4 via capacitor 18 and N channel MOS transistor 14 only. In this case, potential V2 of electrode 2a of liquid crystal cell 2 will be V2 = V1 × C1 / (C1 + C3) = Vb.

If nodes N14 and N15 are in the levels "L" and "H" respectively, N channel MOS transistor 14 is non-conducted while N channel MOS transistor 15 is conducted, and electrode 2a of liquid crystal cell 2 is connected to pixel signal line 4 via capacitor 19 and N channel MOS transistor 15. In this case, potential V2 of electrode 2a of liquid crystal cell 2 will be V2 = V1 × C2 / (C2 + C3) = Vc.

If both nodes N14 and N15 are in the level "L," N channel MOS transistors 14 and 15 are non-conducted and capacitor 20 will not be charged, and hence, V2 = 0.

Here, if each of C1 and C2 is set to have a value different from each other, it will be possible to selectively set potential V2 of electrode 2a of liquid crystal cell 2 to any one of the potentials in four steps, i.e., Va, Vb, Vc or 0. This enables one liquid crystal cell 2 to perform gradation display in four steps. Therefore, according to comparative example, the gradation display can be performed without applying an analog potential to pixel signal line 4, and thus the cost of the gradation display can be reduced since no digital-to-analog conversion circuit is required.

It is noted that capacitor 20 may be dispensed with, since liquid crystal cell 2 have some value of capacitance. In such a case, potential V2 of electrode 2a of liquid crystal cell 2 is determined by potential V1 of pixel signal line 4, capacitance value C1 and C2 of capacitors 18 and 19, and the capacitance value of liquid crystal cell 2.

### Embodiment

In liquid crystal driving circuit 11 in Fig. 2, if there is any residual charge in capacitors 18-20, potential V2 of electrode 2a of liquid crystal cell 2 cannot be accurately set to Va, Vb, Vc and 0 described above. The embodiment is to solve this problem.

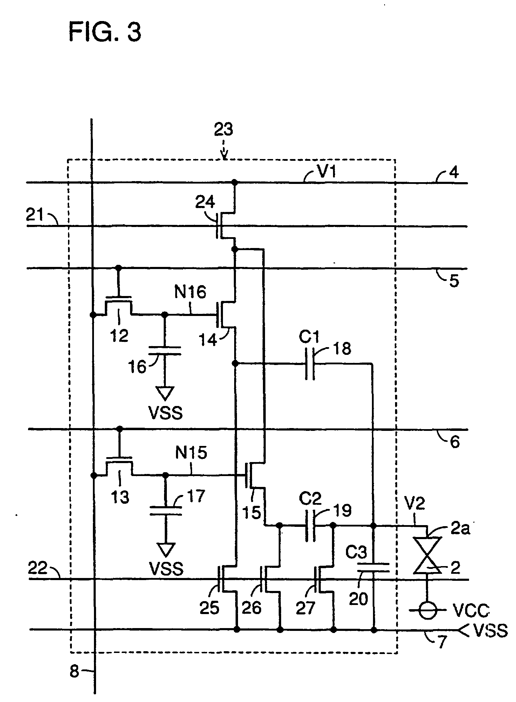

Fig. 3 is a circuit diagram showing main parts of a color liquid crystal display device according to the embodiment. This is compared with Fig. 2.

Referring to Fig. 3, this color liquid crystal display device is different from the color liquid crystal display device in the comparative example, in that a third vertical scanning line 21 and a fourth vertical scanning line 22 are further provided corresponding to each row, so as to replace liquid crystal driving circuit 11 with a liquid crystal driving circuit 23. Liquid crystal driving circuit 23 is different from liquid crystal driving circuit 11 in that N channel MOS transistors 24-27 are added.

N channel MOS transistor 24 is connected between pixel signal line 4 and N channel MOS transistors 14 and 15, the gate thereof being connected to the third vertical scanning line 21 in a corresponding row. N channel MOS transistor 25 is connected between the source of N channel MOS transistor 14 and common interconnection line 7. N channel MOS transistor 26 is connected between the source of N channel MOS transistor 15 and common interconnection line 7. N channel MOS transistor 27 is connected between electrode 2a of liquid crystal cell 2 and common interconnection line 7. Gates of N channel MOS transistors 25-27 are all connected to the fourth vertical scanning line 22.

The operation of the color liquid crystal display device is now described. First, the third vertical scanning line 21 and the fourth vertical scanning line 22 are respectively set to levels "L" and "H," and N channel MOS transistor 24 is non-conducted while N channel MOS transistors 25-27 are conducted to allow the residual charge of capacitors 18-20 to be discharged. As a result, one electrode and the other electrode of each of capacitors 18-20 are set to the same potential VSS. It is noted that N channel MOS transistor 24 is non-conducted for the purpose of preventing short-circuit between pixel signal line 4 and common interconnection line 7.

Subsequently, the third vertical scanning line 21 and the fourth vertical scanning line 22 are set to the levels "H" and "L" respectively, and N channel MOS transistors 25-27 are non-conducted while N channel MOS transistor 24 is conducted. As for the rest, electrode 2a of liquid crystal cell 2 is accurately set to a desired potential, i.e., Va, Vb, Vc or 0 described above, in the same manner as that of the liquid crystal display device in the comparative example.

Finally, both the third vertical scanning line 21 and the fourth vertical scanning line 22 are set to the level "L," so that N channel MOS transistors 24-27 are non-conducted. This prevents variation of potential V2 of electrode 2a of liquid crystal cell 2 due to leakage of current from pixel signal line 4 to capacitors 18 and 19.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A liquid crystal display device capable of gradation display, comprising:
a liquid crystal cell (2) having two electrodes and arranged to receive a power-supply potential (VCC) at one electrode thereof and to have a light transmittance varied in accordance with a gradation display potential (V2) applied to the other electrode (2a) thereof;
a pixel signal line (4) for providing a first reference potential (V1);
a common interconnection line (7) for providing a second reference potential (VSS);
first, second and third vertical scanning lines (5, 6, 22);
a variable capacitance circuit connected between the pixel signal line (4) and the other electrode (2a) of said liquid crystal cell (2), wherein the variable capacitance circuit comprises:
- a first and a second capacitor (18, 19), each having one electrode directly connected to the other electrode (2a) of said liquid crystal cell (2),
- a first and a second field effect transistor (14,15),
- a third and a fourth capacitor, (16, 17) each having one electrode directly connected to a gate electrode of the first and second field effect transistors (14, 15), and each having its other electrode connected to the common interconnection line (7) for receiving the second reference potential (VSS),
- a third and a fourth field effect transistor (12,13), wherein
- the source or drain of each first and second field effect transistor (14, 15) is respectively directly connected to the other electrode of the first and second capacitors (18, 19), the other of the source or drain of each first and second field effect transistor (14, 15) is arranged to receive said first reference potential (V1) from the pixel signal line (4), and the gate of each first and second field effect transistor (14, 15) is respectively directly connected to the source or drain of the third and fourth field effect transistors (12, 13), the gates of the third and fourth field effect transistors (12, 13) are respectively directly connected to the first and second vertical scanning lines (5, 6),
- the first and second field effect transistors (14, 15) are switchable selectively to set the capacitance value of the variable capacitance circuit in a plurality of steps in response to an image signal that sets the gradation display potential (V2) applied to the other electrode (2a) of said liquid crystal cell (2),
said variable capacitance circuit further comprising:
- fifth and sixth field effect transistors (25, 26) having the source or drain each respectively directly connected to the other electrode of the first and second capacitors (18, 19), the other of the source or drain of each fifth and sixth field effect transistor being connected to the common interconnection line (7) for receiving the second reference potential (VSS),
- a seventh field effect transistor (27), the source or drain of the seventh field effect transistor being directly connected to the other electrode (2a) of the liquid crystal cell (2), and the other of the source or drain of the seventh field effect transistor being connected to the common interconnection line (7) for receiving the second reference potential (VSS), and wherein
- the gates of the fifth, sixth and seventh field effect transistors (25, 26, 27) are directly connected to the third vertical scanning line (22); and
the liquid crystal display device further comprising:
a control circuit (9, 10), which is arranged to charge or discharge one electrode of each of the third and fourth capacitors (16, 17) to switch the first and second field effect transistors (14, 15) on or off and to switch the fifth, sixth and seventh field effect transistors (25, 26, 27) on before application of the gradation display potential (V2) to the other electrode (2a) of the liquid crystal cell (2), thereby enabling the gradation display potential (V2) of the electrodes of the first and second capacitors (18, 19) directly connected to the other electrode (2a) of said liquid crystal cell (2) to be reset to the second reference potential (VSS).

2. A liquid crystal display device according to claim 1, wherein the first and second capacitors (18, 19) have a capacitance value different from each other.

3. A liquid crystal display device according to claim 1, further comprising a fifth capacitor (20) having one electrode connected to the other electrode (2a) of the liquid crystal cell (2a) and another electrode connected to the common interconnection line for providing the second reference potential (VSS).

4. A liquid crystal display device according to claim 1, wherein the variable capacitance circuit further comprises an eighth field effect transistor (24), the source or drain of the transistor being connected to the sources or drains of the first and second field effect transistors (14, 15) connected to the pixel signal line (4) and the other of the source or drain of the eighth field effect transistor being connected to the pixel signal line (4), and the gate of the eighth field effect transistor being connected to a fourth vertical scanning line (21); and wherein
the control circuit (9, 10) is arranged to switch the eighth field effect transistor (24) off after setting the potential of the other electrode (2a) of said liquid crystal cell (2) to a required gradation potential (V2) to cut off the feeding of the first reference potential (V1) from the pixel signal line (4) to the other first and second field effect transistors (14, 15).

5. A liquid crystal display device according to claim 1, wherein said liquid crystal display is arranged to be installed in a portable electronic device.

## Patentansprüche

1. Flüssigkristallanzeigevorrichtung, die zur Gradationsanzeige fähig ist und folgendes aufweist:
eine Flüssigkristallzelle (2), die zwei Elektroden hat und so angeordnet ist, daß sie ein Energieversorgungspotential (VCC) an der einen Elektrode davon empfängt und eine Lichtdurchlässigkeit hat, die sich in Abhängigkeit von einem Gradationsanzeigepotential (V2), das an die andere Elektrode (2a) davon angelegt wird, ändert;
eine Pixelsignalleitung (4) zur Abgabe eines ersten Bezugspotentials (V1);
eine gemeinsame Verbindungsleitung (7) zur Abgabe eines zweiten Bezugspotentials (VSS);
erste, zweite und dritte vertikale Abtastleitungen (5, 6, 22);
eine variable Kapazitätsschaltung, die zwischen die Pixelsignalleitung (4) und die andere Elektrode (2a) der Flüssigkristallzelle (2) geschaltet ist, wobei die variable Kapazitätsschaltung folgendes aufweist:
- einen ersten und einen zweiten Kondensator (18, 19), die jeweils eine Elektrode haben, die mit der anderen Elektrode (2a) der Flüssigkristallzelle (2) direkt verbunden ist,
- einen ersten und einen zweiten Feldeffekttransistor (14, 15),
- einen dritten und einen vierten Kondensator (16, 17), die jeweils eine Elektrode haben, die mit einer Gateelektrode der ersten und zweiten Feldeffekttransistoren (14, 15) direkt verbunden ist, und deren andere Elektrode jeweils mit der gemeinsamen Verbindungsleitung (7) verbunden ist, um das zweite Bezugspotentials (VSS) zu empfangen,
- einen dritten und einen vierten Feldeffekttransistor (12, 13), wobei die Source oder der Drain jedes ersten und zweiten Feldeffekttransistors (14, 15) jeweils mit der anderen Elektrode der ersten und zweiten Kondensatoren (18, 19) direkt verbunden ist, der andere von der Source oder dem Drain jedes ersten und zweiten Feldeffekttransistors (14, 15) angeordnet ist, um das erste Bezugspotential (V1) von der Pixelsignalleitung (4) zu empfangen, und das Gate jedes ersten und zweiten Feldeffekttransistors (14, 15) jeweils mit der Source oder dem Drain der dritten und vierten Feldeffekttransistoren (12, 13) direkt verbunden ist, die Gates der dritten und vierten Feldeffekttransistoren (12, 13) jeweils mit den ersten und zweiten vertikalen Abtastleitungen (5, 6) direkt verbunden sind,
- die ersten und zweiten Feldeffekttransistoren (14, 15) selektiv so schaltbar sind, daß der Kapazitätswert der variablen Kapazitätsschaltung in einer Vielzahl von Schritten in Abhängigkeit von einem Bildsignal eingestellt wird, das das Gradationsanzeigepotential (V2) einstellt, das an die andere Elektrode (2a) der Flüssigkristallzelle (2) angelegt wird,
wobei die variable Kapazitätsschaltung ferner folgendes aufweist:
fünfte und sechste Feldeffekttransistoren (25, 26), deren Source oder Drain jeweils mit der anderen Elektrode der ersten und zweiten Kondensatoren (18, 19) direkt verbunden ist, wobei der andere von der Source oder dem Drain jedes fünften und sechsten Feldeffekttransistors mit der gemeinsamen Verbindungsleitung (7) verbunden ist, um das zweite Bezugspotential (VSS) zu empfangen,
- einen siebten Feldeffekttransistor (27), wobei die Source oder der Drain des siebten Feldeffekttransistors mit der anderen Elektrode (2a) der Flüssigkristallzelle (2) direkt verbunden ist und der andere von der Source oder dem Drain des siebten Feldeffekttransistors mit der gemeinsamen Verbindungsleitung (7) verbunden ist, um das zweite Bezugspotential (VSS) zu empfangen, und wobei
- die Gates der fünften, sechsten und siebten Feldeffekttransistoren (25, 26, 27) mit der dritten vertikalen Abtastleitung (22) direkt verbunden sind; und
wobei die Flüssigkristallanzeigevorrichtung ferner folgendes aufweist:
eine Steuerschaltung (9, 10), die so angeordnet ist, daß sie eine Elektrode von jedem von den dritten und vierten Kondensatoren (16, 17) lädt oder entlädt, um die ersten und zweiten Feldeffekttransistoren (14, 15) ein- oder auszuschalten und um die fünften, sechsten und siebten Feldeffekttransistoren (25, 26, 27) vor Anlegen des Gradationsanzeigepotentials (V2) an die andere Elektrode (2a) der Flüssigkristallzelle (2) einzuschalten, so daß das Gradationsanzeigepotential (V2) der Elektroden der ersten und zweiten Kondensatoren (18, 19), die mit der anderen Elektrode (2a) der Flüssigkristallzelle (2) direkt verbunden sind, auf das zweite Bezugspotential (VSS) rückgesetzt werden kann.

2. Flüssigkristallanzeigevorrichtung nach Anspruch 1, wobei die ersten und zweiten Kondensatoren (18, 19) einen voneinander verschiedenen Kapazitätswert haben.

3. Flüssigkristallanzeigevorrichtung nach Anspruch 1, die ferner einen fünften Kondensator (20) aufweist, dessen eine Elektrode mit der anderen Elektrode (2a) der Flüssigkristallzelle (2) verbunden ist und dessen andere Elektrode mit der gemeinsamen Verbindungsleitung verbunden ist, um das zweite Bezugspotential (VSS) abzugeben.

4. Flüssigkristallanzeigevorrichtung nach Anspruch 1, wobei die variable Kapazitätsschaltung ferner einen achten Feldeffekttransistor (24) aufweist, wobei die Source oder der Drain des Transistors mit den Sources oder Drains der ersten und zweiten Feldeffekttransistoren (14, 15) verbunden ist, die mit der Pixelsignalleitung (4) verbunden sind, und wobei der andere von der Source oder dem Drain des achten Feldeffekttransistors mit der Pixelsignalleitung (4) verbunden ist und das Gate des achten Feldeffekttransistors mit einer vierten vertikalen Abtastleitung (21) verbunden ist; und wobei
die Steuerschaltung (9, 10) so angeordnet ist, daß sie den achten Feldeffekttransistor (24) nach Einstellen des Potentials der anderen Elektrode (2a) der Flüssigkristallzelle (2) auf ein erforderliches Gradationspotential (V2) ausschaltet, um die Zufuhr des ersten Bezugspotentials (V1) von der Pixelsignalleitung (4) zu den anderen ersten und zweiten Feldeffekttransistoren (14, 15) auszuschalten.

5. Flüssigkristallanzeigevorrichtung nach Anspruch 1, wobei die Flüssigkristallanzeige so angeordnet ist, daß sie in eine tragbare elektronische Vorrichtung einbaubar ist.

## Revendications

1. Dispositif d'affichage à cristal liquide, apte à afficher une gradation, comprenant :
une cellule à cristal liquide (2) comportant deux électrodes et agencée de manière à recevoir un potentiel d'alimentation en énergie (VCC) au niveau d'une de ses électrodes et à posséder une transmittance pour la lumière qui varie en fonction d'un potentiel d'affichage de gradation (V2) appliqué à l'autre électrode (2a) de cette cellule;
une ligne (4) de transmission de signal de pixel servant à délivrer un premier potentiel de référence (V1);
une ligne commune d'interconnexion (7) pour fournir un second potentiel de référence (VSS);
des première, seconde et troisième lignes de balayage verticales (5,6,22);
un circuit à capacité variable connecté entre la ligne (4) de transmission de signal de pixel et l'autre électrode (2a) de ladite cellule à cristal liquide (2), le circuit à capacité variable comprenant :
- des premier et second condensateurs (18,19) comportant chacun une électrode connectée directement à l'autre électrode (2a) de ladite cellule à cristal liquide (2),
- des premier et second transistors à effet de champ (14, 15),
- des troisième et quatrième condensateurs (16,17) possédant chacun une électrode connectée directement à une électrode de grille des premier et second transistors à effet de champ (14,15) et dont l'autre électrode de chacun des condensateurs est connectée à la ligne d'interconnexion commune (7) pour recevoir le second potentiel de référence (VSS),
- des troisième et quatrième transistors à effet de champ (12, 13), et dans lequel
- la source ou le drain de chacun des premier et second transistors à effet de champ (14,15) est respectivement connecté directement à l'autre électrode des premier et second condensateurs (18,19), l'autre de la source ou du drain de chacun des premier et second transistors à effet de champ (14,15) est agencé pour recevoir ledit premier potentiel de référence (V1) de la part de la ligne (4) de transmission de signal de pixel, et la grille de chacun des premier et second transistors à effet de champ (14,15) est respectivement connectée directement à la source ou au drain des troisième et quatrième transistors à effet de champ (12,13), les grilles des troisième et quatrième transistors à effet de champ (12,13) sont respectivement connectées directement aux première et seconde lignes de balayage verticales (5,6),
- les premier et second transistors à effet de champ (14, 15) peuvent être commutés sélectivement pour régler la valeur de capacité du circuit à capacité variable selon une pluralité d'échelons en réponse à un signal d'image qui règle le potentiel d'affichage de gradation (B2) appliqué à l'autre électrode (2a) de ladite cellule à cristal liquide (2),
ledit circuit à capacité variable comprenant en outre :
- des cinquième et sixième transistors à effet de champ (25,26), dont la source ou le drain est chacun connecté respectivement directement à l'autre électrode des premier et second condensateurs (18,19), l'autre de la source ou du drain de chacun des cinquième et sixième transistors à effet de champ étant connecté à la ligne d'interconnexion commune (7) pour recevoir le second potentiel de référence (VSS),
- un septième transistor à effet de champ (27), la source ou le drain du septième transistor à effet de champ étant connecté directement à l'autre électrode (2a) de la cellule à cristal liquide (2) et l'autre de la source ou du drain du septième transistor à effet de champ étant connecté à la ligne d'interconnexion commune (7) pour recevoir le second potentiel de référence (VSS), et
- des grilles des cinquième, sixième et septième transistors à effet de champ (25,26,27) sont connectées directement à la troisième ligne de balayage vertical (22); et
le dispositif à cristal liquide comprenant en outre :
un circuit de commande (9,10) qui est agencé de manière à charger ou décharger une électrode de chacun des troisième et quatrième condensateurs (16,17) pour placer à l'état conducteur ou à l'état bloqué les premier et second transistors à effet de champ (14,15) et pour placer à l'état conducteur les cinquième, sixième et septième transistors à effet de champ (25,26,27) avant l'application du potentiel d'affichage de gradation (V2) à l'autre électrode (2a) de la cellule à cristal liquide (2) de manière à permettre le retour au second potentiel de référence (VSS), du potentiel d'affichage de gradation (V2) des électrodes des premier et second condensateurs (18,19) connectés directement à l'autre
électrode (2a) de ladite cellule à cristal liquide (2).

2. Dispositif d'affichage à cristal liquide selon la revendication 1, dans lequel les premier et second condensateurs (18,19) possèdent des valeurs capacitives différentes les unes des autres.

3. Dispositif d'affichage à cristal liquide selon la revendication 1, comprenant en outre un cinquième condensateur (20) possédant une électrode connectée à l'autre électrode (2a) de la cellule à cristal liquide (2) et une autre électrode connectée à la ligne d'interconnexion commune pour la délivrance du second potentiel de référence (VSS).

4. Dispositif d'affichage à cristal liquide selon la revendication 1, dans lequel le circuit à capacité variable comprend en outre un huitième transistor à effet de champ (24), la source ou le drain du transistor étant connecté aux sources ou aux drains des premier et second transistors à effet de champ (14,15) connectés à la ligne (4) de transmission de signal de pixel, et l'autre de la source ou du drain du huitième transistor à effet de champ étant connectée à la ligne (4) de transmission du signal de pixel, et la grille du huitième transistor à effet de champ étant connectée à une quatrième ligne de balayage vertical (21), et dans lequel
le circuit de commande (9,10) est agencé de manière à placer à l'état bloqué le huitième transistor à effet de champ (24) après réglage du potentiel de l'autre électrode (2a) de ladite cellule à cristal liquide (2) sur un potentiel de gradation requis (V2) pour interrompre l'envoi du premier potentiel de référence (V1) depuis la ligne (4) de transmission du signal de pixel aux autres premier et second transistors à effet de champ (14,15).

5. Dispositif d'affichage à cristal liquide selon la revendication 1, dans lequel ledit dispositif d'affichage à cristal liquide est agencé de manière à être installé dans un dispositif électronique portable.
